# EUROPEAN PATENT APPLICATION

(11) **EP 4 764 413 A1**
(43) Date of publication of application: **24.06.2026**
(21) Application number: 25222146.0
(22) Date of filing: 10.12.2025
(51) Int. Cl.: G01C 21/20, G05D 1/00, H04L 9/00, H04L 9/40, H04W 4/00, H04W 12/00

(54) **IN-VEHICLE APPARATUS, VEHICLE, AND SYSTEM**

(30) Priority: 23.12.2024 JP 2024226638
(71) Applicant: Toyota Jidosha Kabushiki Kaisha, Toyota-shi, Aichi-ken 471-8571 (JP)
(72) Inventor: SUGIMOTO, Shingo, Toyota-shi, Aichi-ken, 471-8571 (JP); ITO, Yuma, Toyota-shi, Aichi-ken, 471-8571 (JP)
(74) Representative: Simmons & Simmons

(57) **Abstract**

An in-vehicle apparatus (100) includes a communication unit (101) configured to perform wireless communication, a storage unit (102) storing data that is restricted from being transferred outside a region, and a control unit (103) configured to, when the control unit (103) receives predetermined identification information from a wireless communication apparatus (40) by performing wireless communication with the wireless communication apparatus (40) via the communication unit (101) during a process in which the vehicle (10) moves outside the region, delete the data from the storage unit (102).

## Description

### BACKGROUND OF THE INVENTION

### 1. Field of the Invention

The disclosure relates to an in-vehicle apparatus, a vehicle, and a system.

### 2. Description of Related Art

A technology related to the use of map data in an in-vehicle apparatus is known. For example, Japanese Unexamined Patent Application Publication No. 2008-281353 (JP 2008-281353 A) describes an in-vehicle map display apparatus that stores general map data and country-specific map data specially created for each country and displays a map using the general map data and the country-specific map data related to a destination country of a vehicle.

### SUMMARY OF THE INVENTION

Map data is used to enable various functions implemented in a vehicle, such as route guidance and autonomous driving; however, in some countries, map data is treated as important data, and taking the map data out of the country is restricted. When vehicles move from such countries to other countries, it may be requested to delete the important data stored in the vehicles.

The disclosure automatically deletes data restricted from being transferred outside a region before a vehicle moves outside the region.

A first aspect of the disclosure relates to an in-vehicle apparatus. The in-vehicle apparatus is installed in a vehicle. The in-vehicle apparatus includes: a communication unit configured to perform wireless communication; a storage unit storing data restricted from being transferred outside a region; and a control unit configured to, when the control unit receives predetermined identification information from a wireless communication apparatus by performing the wireless communication with the wireless communication apparatus via the communication unit during a process in which the vehicle moves outside the region, delete the data from the storage unit.

A second aspect of the disclosure relates to a data deletion method. The data deletion method is performed by an in-vehicle apparatus installed in a vehicle. The in-vehicle apparatus includes a communication unit configured to perform wireless communication, a storage unit storing data that is restricted from being transferred outside a region, and a control unit. The data deletion method includes when the control unit receives predetermined identification information from a wireless communication apparatus by performing the wireless communication with the wireless communication apparatus via the communication unit during a process in which the vehicle moves outside the region, deleting the data from the storage unit.

According to the aspects of the disclosure, it is possible to automatically delete data that is restricted from being transferred outside a region before a vehicle moves outside the region.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram that shows the schematic configuration of a system according to an embodiment of the disclosure;
FIG. 2 is a block diagram that shows the configuration of an in-vehicle apparatus according to the embodiment of the disclosure;
FIG. 3 is a conceptual diagram that shows an example in which a vehicle equipped with the in-vehicle apparatus according to the embodiment of the disclosure is transported by a cargo ship; and
FIG. 4 is a flowchart that shows the operation of the in-vehicle apparatus according to the embodiment of the disclosure.

### DETAILED DESCRIPTION OF EMBODIMENTS

Hereinafter, an embodiment of the disclosure will be described with reference to the accompanying drawings.

Like reference signs denote the same or corresponding portions in the drawings. In the description of the present embodiment, the description of the same or corresponding portions is omitted or simplified as needed.

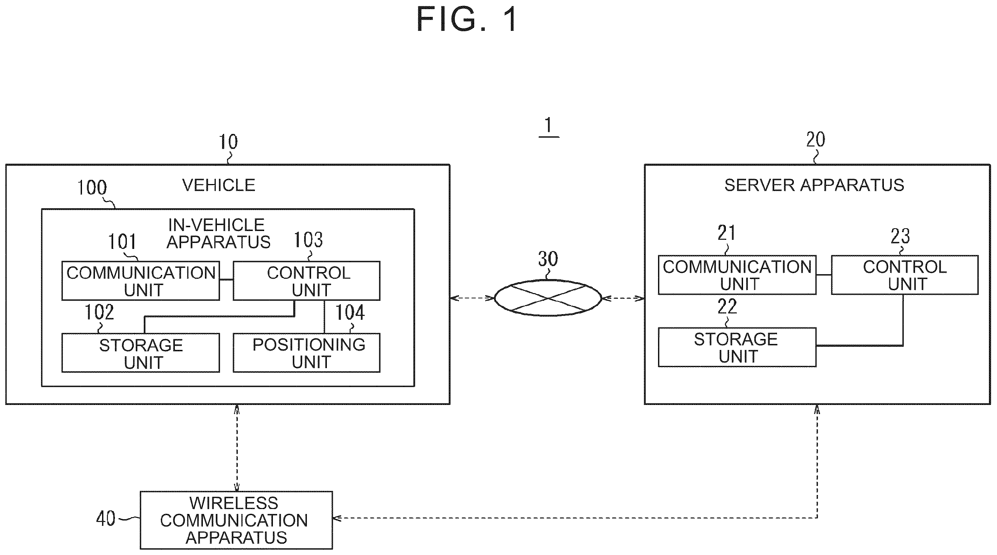

The configuration of a system 1 according to the present embodiment will be described with reference to FIG. 1.

The system 1 includes an in-vehicle apparatus 100, a server apparatus 20, and a wireless communication apparatus 40. The system 1 may include one or more other in-vehicle apparatuses similar to the in-vehicle apparatus 100. The system 1 may include one or more other server apparatuses similar to the server apparatus 20. The system 1 may include one or more other wireless communication apparatuses similar to the wireless communication apparatus 40.

The in-vehicle apparatus 100 is a communication apparatus installed in a vehicle 10. In the present embodiment, between a first wireless communication method that uses a mobile communication network 30 of a communication carrier and a second wireless communication method different from the first wireless communication method, the in-vehicle apparatus 100 supports at least the second wireless communication method. The first wireless communication method is a wireless communication method compliant with a mobile communication standard, such as an LTE, a 4G standard, and a 5G standard. LTE is an abbreviation for Long Term Evolution. 4G is an abbreviation for 4th generation. 5G is an abbreviation for 5th generation. The second wireless communication method may be any wireless communication method that does not use the mobile communication network 30. The second wireless communication method is, for example, a wireless communication method compliant with wireless LAN communication standards, such as IEEE 802.11, or near field communication standards, such as NFC, UHF, and Bluetooth (registered trademark). IEEE is an abbreviation for Institute of Electrical and Electronics Engineers. LAN is an abbreviation for local area network. NFC is an abbreviation for near-field communication. UHF is an abbreviation for ultra-high frequency.

The vehicle 10 is any type of vehicle, such as a gasoline vehicle, a diesel vehicle, a hydrogen vehicle, an HEV, a PHEV, a BEV, and an FCEV. HEV is an abbreviation for hybrid electric vehicle. PHEV is an abbreviation for plug-in hybrid electric vehicle. BEV is an abbreviation for battery electric vehicle. FCEV is an abbreviation for fuel cell electric vehicle. The vehicle 10 may be automatically driven at a selected level. The level of automation is, for example, any one of level 1 to level 5 in SAE-defined levels. SAE is an abbreviation for Society of Automotive Engineers. The vehicle 10 may be a MaaS-dedicated vehicle. MaaS is an abbreviation for Mobility as a Service.

The server apparatus 20 is an information processing apparatus that is installed in a facility, such as a data center, and that belongs to a cloud computing system or another computing system.

The wireless communication apparatus 40 is a communication apparatus installed at or around a location where the vehicle 10 passes during the process in which the vehicle 10 moves outside a region. The "region" refers to a country in the present embodiment. Alternatively, the "region" may refer to a region other than a country, such as a region included in multiple regions within the same country and a region that spans multiple countries. In the present embodiment, the wireless communication apparatus 40 supports the second wireless communication method. The wireless communication apparatus 40 is, for example, a communication apparatus, such as a Wi-Fi (registered trademark) access point, capable of wireless LAN communication or a communication apparatus capable of near field communication, such as NFC, UHF, and Bluetooth.

The outline of the present embodiment will be described with reference to FIG. 1.

The in-vehicle apparatus 100 stores, for example, data that is restricted from being transferred outside a region (hereinafter, such data may be referred to as "important data"). The in-vehicle apparatus 100 deletes the stored important data when the in-vehicle apparatus 100 receives predetermined identification information from the wireless communication apparatus 40 by performing wireless communication with the wireless communication apparatus 40 during the process in which the vehicle 10 moves outside the region.

Examples of the important data include map data used to enable various functions implemented in the vehicle 10, such as route guidance and autonomous driving. Examples of the map data include land maps, nautical charts, aeronautical charts, and any combination of them. When the map data includes general map data and country-specific map data created specifically for each country, only the country-specific map data may be treated as important data. In other words, the in-vehicle apparatus 100 may delete only part of the stored map data when the in-vehicle apparatus 100 receives identification information from the wireless communication apparatus 40.

The important data may include data related to a dashboard camera. Examples of the data related to a dashboard camera include image data, voice data, position data, and any combination of them. When the data related to a dashboard camera includes multiple types of data, such as image data, voice data, and position data, only any one or more types among these multiple types of data may be treated as important data. In other words, the in-vehicle apparatus 100 may delete only part of the stored data related to a dashboard camera when the in-vehicle apparatus 100 receives identification information from the wireless communication apparatus 40.

In the present embodiment, during the process in which the vehicle 10 moves outside a region, deletion of important data is automatically performed when the in-vehicle apparatus 100 receives identification information using a relatively short-range wireless communication method without using the mobile communication network 30. Thus, it is possible to automatically delete the important data before the vehicle 10 moves outside the region.

In order for other vehicles that do not move outside the region not to receive identification information and erroneously delete important data, for example, entry into the communication area of the wireless communication apparatus 40 may be limited only to a vehicle group that moves outside the region. Alternatively, the wireless communication apparatus 40 may be activated only during a time period when a vehicle group that moves outside the region passes through or is present. Alternatively, the wireless communication apparatus 40 may be installed in a place where only a vehicle group that moves outside the region passes through or is present.

When, for example, the important data is not that critical, the in-vehicle apparatus 100 may delete the important data when the vehicle 10 moved outside the region. In this case, data of other vehicles that continue to move within the same region is not deleted. The data is deleted on condition that the vehicle 10 moved outside the region. In this case, the data is taken outside the region for a certain period of time and the data may remain when communication is disconnected. The advantage of being able to delete a large amount of data taken out so far outweighs such disadvantages.

In the present embodiment, the in-vehicle apparatus 100 is capable of communicating with the server apparatus 20. When deletion of important data is complete, the in-vehicle apparatus 100 transmits deletion information indicating that the important data has been deleted, to the server apparatus 20. In other words, when deletion of important data is complete, the in-vehicle apparatus 100 transmits information indicating that the important data has been deleted, to the information processing apparatus. The transmission of this information may be performed not only when a notification that important data has been deleted is transmitted but also when the deletion of important data is logged without transmitting a notification. The transmission of deletion information may be performed using the first wireless communication method that uses the mobile communication network 30, or may be performed using the second wireless communication method that does not use the mobile communication network 30. In the latter case, when the deletion of important data is complete, the in-vehicle apparatus 100 transmits deletion information to the server apparatus 20 via the wireless communication apparatus 40 by further performing wireless communication with the wireless communication apparatus 40. The wireless communication apparatus 40 and the server apparatus 20 may be connected via any network, such as the Internet. Such a network may include the mobile communication network 30.

According to the present embodiment, the server apparatus 20 is able to confirm that the important data has been deleted before the vehicle 10 moves outside the region. In order to be able to determine which vehicle has important data that has been deleted, for example, the identifier, such as VIN, of the vehicle 10 may be included in the deletion information. "VIN" is an abbreviation for vehicle identification number. In order to be able to determine which wireless communication apparatus is installed in a place where important data has been deleted, for example, the identifier, such as SSID and MAC address, of the wireless communication apparatus 40 may be included in the deletion information. "SSID" is an abbreviation for service set identifier. "MAC" is an abbreviation for media access control. in order to be able to determine which type of data has been deleted, information regarding the types of deleted data, such as country-specific map data, image data, voice data, and position data, may be included in the deletion information.

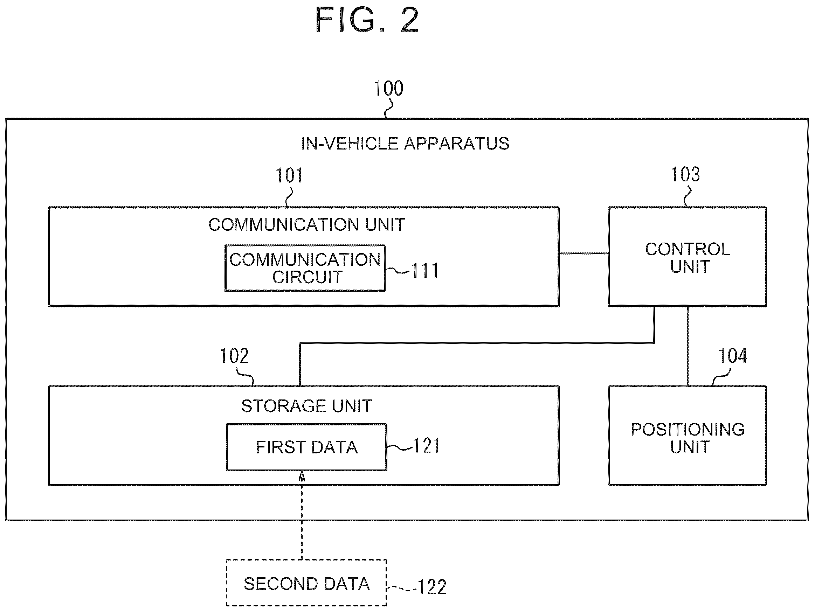

In the present embodiment, as shown in FIG. 2, the in-vehicle apparatus 100 stores, for example, first data 121 as important data. The first data 121 is data that is used or acquired within a first region. The first region is, for example, a country where the vehicle 10 has been used until now. When the in-vehicle apparatus 100 receives identification information from the wireless communication apparatus 40, the in-vehicle apparatus 100 deletes the stored first data 121 and receives second data 122 from the server apparatus 20. The second data 122 is data that is used or acquired within a second region to which the vehicle 10 moves from the first region. The second region is a country where the vehicle 10 is used in the future, such as a destination country where the vehicle 10 is sold as a used car and a country where a driver of the vehicle 10 temporarily passes through or stays while driving from one country to another. The reception of the second data 122 may be performed using the first wireless communication method or may be performed using the second wireless communication method, as in the case of the transmission of the deletion information. In the latter case, when the in-vehicle apparatus 100 receives identification information from the wireless communication apparatus 40, the in-vehicle apparatus 100 receives the second data 122 from the server apparatus 20 via the wireless communication apparatus 40 by further performing wireless communication with the wireless communication apparatus 40.

According to the present embodiment, after data for the first region is deleted, data for the second region can be newly acquired. For example, during the process in which the vehicle 10 moves from a first country to a second country, it is possible to delete country-specific map data for the first country, which is restricted from being taken outside the country, and immediately acquire country-specific map data that can be requested in the second country that is a destination of movement. However, when the country-specific map data for the second country is also restricted from being taken outside the country, the acquisition of the country-specific map data for the second country can be requested at a location where the acquisition of the country-specific map data for the second country is not restricted. Therefore, the in-vehicle apparatus 100 controls the acquisition or deletion of data for each region in accordance with the type or handling level of the data, the identification information received from the wireless communication apparatus 40, and the like.

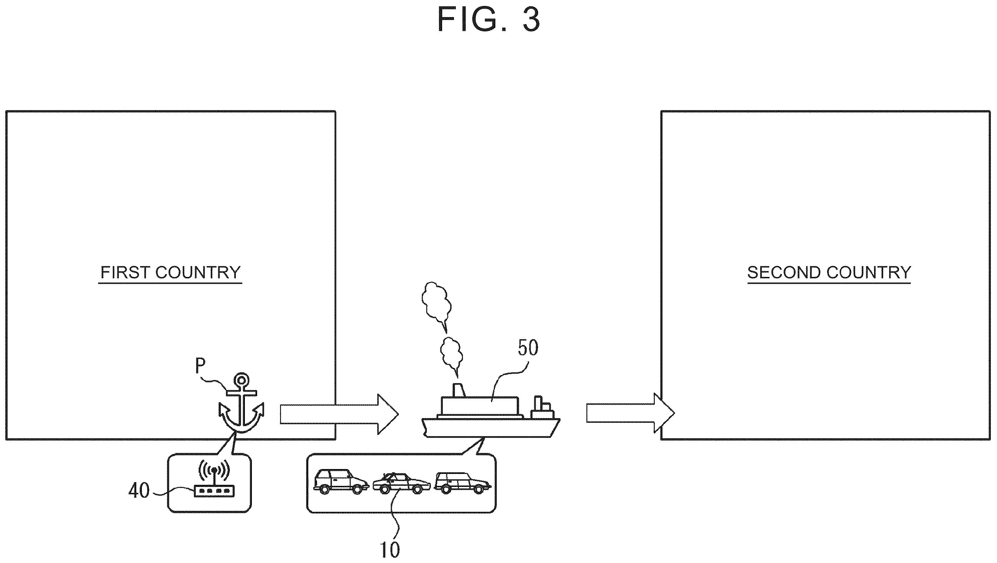

As shown in FIG. 3, for example, it is conceivable that the vehicle 10 equipped with the in-vehicle apparatus 100 is transported by a cargo ship 50 from a first country to a second country that is a destination country. In this example, when the vehicle 10 is driven or transported by truck to reach a port P of the first country, the in-vehicle apparatus 100 detects the wireless communication apparatus 40 installed in advance at the port P by receiving a beacon signal emitted from the wireless communication apparatus 40 before the vehicle 10 is loaded onto the cargo ship 50. Then, the in-vehicle apparatus 100 confirms that the identification information contained in the beacon signal is predetermined information as a trigger to delete important data and then deletes the first data 121, such as country-specific map data, used in the first country. When the vehicle 10 is transported by the cargo ship 50 and reaches the second country, the in-vehicle apparatus 100 receives the second data 122, such as country-specific map data, that can be requested in the second country, from the server apparatus 20. The reception of the second data 122 may be performed using any communication method, such as a method of using a mobile communication network of a communication carrier in the second country. Whether the vehicle 10 has reached the second country can be determined using, for example, a GNSS receiver (described later). GNSS is an abbreviation for global navigation satellite system.

According to this example, when the vehicle 10 is transported abroad, it can comply with the laws of countries that prohibit taking important data outside by automatically deleting important data, such as domestic map data. The wireless communication apparatus 40 may be installed at another location along an international transport route for the vehicle 10 instead of being installed at the port P. For example, the wireless communication apparatus 40 may be installed on the cargo ship 50. According to such examples, the wireless communication apparatus 40 can be installed in a place where only a vehicle group that moves to the second country is present, so it is possible to restrict other vehicles that do not move to the second country from receiving identification information and erroneously deleting important data.

As another example, it is conceivable that the vehicle 10 moves from a first country to a second country that is a temporary stay country while a driver of the vehicle 10 is driving from one country to another. In this example, when the vehicle 10 passes through a border checkpoint, the in-vehicle apparatus 100 detects the wireless communication apparatus 40 installed in advance at the border checkpoint by receiving a beacon signal emitted from the wireless communication apparatus 40. Then, the in-vehicle apparatus 100 confirms that the identification information contained in the beacon signal is predetermined information as a trigger to delete important data and then deletes the first data 121, such as country-specific map data, used in the first country. When the vehicle 10 passes through the border and enters the second country, the in-vehicle apparatus 100 receives the second data 122, such as country-specific map data, that can be requested in the second country, from the server apparatus 20. The reception of the second data 122 may be performed using any communication method, such as a method of using a mobile communication network of a communication carrier in the first country or in the second country. For example, the second data 122 may be received via the wireless communication apparatus 40 installed at the border checkpoint. Whether the vehicle 10 has entered the second country can be determined using, for example, a GNSS receiver (described later).

The configuration of the in-vehicle apparatus 100 according to the present embodiment will be described with reference to FIG. 1 and FIG. 2.

The in-vehicle apparatus 100 includes a communication unit 101, a storage unit 102, a control unit 103, and a positioning unit 104.

The communication unit 101 includes at least a communication circuit 111 that performs wireless LAN communication or near field communication. The communication unit 101 may further include a communication circuit that performs mobile communication using the mobile communication network 30 of a communication carrier. In other words, between the first wireless communication method that uses the mobile communication network 30 of the communication carrier and the second wireless communication method different from the first wireless communication method, the communication unit 101 supports at least the second wireless communication method. The communication unit 101 receives information used in the operation of the in-vehicle apparatus 100 and transmits information obtained through the operation of the in-vehicle apparatus 100.

The storage unit 102 includes at least one semiconductor memory, at least one magnetic memory, at least one optical memory, or any combination of them. The semiconductor memory is, for example, a RAM, a ROM, or a flash memory. RAM is an abbreviation for random access memory. ROM is an abbreviation for read only memory. The RAM is, for example, an SRAM or a DRAM. SRAM is an abbreviation for static random access memory. DRAM is an abbreviation for dynamic random access memory. The ROM is, for example, an EEPROM. EEPROM is an abbreviation for electrically erasable programmable read only memory. The flash memory is, for example, an SSD. SSD is an abbreviation for solid-state drive. The magnetic memory is, for example, an HDD. HDD is an abbreviation for hard disk drive. The storage unit 102 functions as, for example, a main storage device, an auxiliary storage device, or a cache memory. The storage unit 102 stores information used in the operation of the in-vehicle apparatus 100 and information obtained through the operation of the in-vehicle apparatus 100.

The storage unit 102 includes a nonvolatile memory that stores important data whose transfer outside the region is restricted. In the present embodiment, important data is the first data 121. The first data 121 is data that is used or acquired within the first region. The first data 121 is data that is used or acquired within the first region by one of a navigation device and a dashboard camera mounted on the vehicle 10. The navigation device or the dashboard camera may function as the in-vehicle apparatus 100. The first data 121 is deleted during the process in which the vehicle 10 moves from the first region to the second region. After the first data 121 is deleted, the second data 122 can be stored. The second data 122 is data that is used or acquired within the second region. The second data 122 is, for example, data that is used or acquired within the second region by one of the navigation device or the dashboard camera.

The control unit 103 includes at least one processor, at least one programmable circuit, at least one dedicated circuit, or any combination of them. The processor is, for example, a general-purpose processor, such as a CPU and a GPU, or a special-purpose processor specialized in a specific process. CPU is an abbreviation for central processing unit. GPU is an abbreviation for graphics processing unit. The programmable circuit is, for example, an FPGA. FPGA is an abbreviation for field-programmable gate array. The dedicated circuit is, for example, an ASIC. ASIC is an abbreviation for application specific integrated circuit. The control unit 103 executes a process related to the operation of the in-vehicle apparatus 100 while controlling the units of the in-vehicle apparatus 100.

The positioning unit 104 includes at least one GNSS receiver. GNSS is, for example, GPS, QZSS, BDS, GLONASS, or Galileo. GPS is an abbreviation for Global Positioning System. QZSS is an abbreviation for Quasi-Zenith Satellite System. The satellites of QZSS are called quasi-zenith satellites. BDS is an abbreviation for BeiDou Navigation Satellite System. GLONASS is an abbreviation for Global Navigation Satellite System. The positioning unit 104 measures the position of the in-vehicle apparatus 100. In other words, the positioning unit 104 measures the position of the vehicle 10 where the in-vehicle apparatus 100 is installed.

The functions of the in-vehicle apparatus 100 are implemented by the processor, that is, the control unit 103, running a program according to the present embodiment. In other words, the functions of the in-vehicle apparatus 100 are implemented by software. The program causes a computer to function as the in-vehicle apparatus 100 by causing the computer to execute the operation of the in-vehicle apparatus 100. In other words, the computer executes the operation of the in-vehicle apparatus 100 in accordance with the program to function as the in-vehicle apparatus 100.

The program can be stored in a non-transitory computer-readable storage medium. The non-transitory computer-readable storage medium is, for example, a flash memory, a magnetic recording device, an optical disc, a magneto-optical recording medium, or a ROM. The program is distributed by, for example, selling, transferring, or lending a portable medium, such as an SD card, a DVD, and a CD-ROM, in which the program is stored. "SD" is an abbreviation for Secure Digital. "DVD" is an abbreviation for digital versatile disc. "CD-ROM" is an abbreviation for compact disc read only memory. Alternatively, the program may be distributed by storing the program in a storage of a server and transferring the program from the server to another computer. Alternatively, the program may be provided as a program product.

A computer, for example, once stores a program, stored in a portable medium or transferred from a server, in a main storage device. Then, the computer causes a processor to read the program stored in the main storage device and executes a process according to the read program on the processor. The computer may directly read the program from the portable medium and execute a process according to the program. Each time the program is transferred from a server to the computer, the computer may occasionally execute a process according to the received program. The program may be executed by a so-called ASP service in which the program is not transferred from a server to the computer and a function is implemented only by providing an execution instruction and acquiring a result. ASP is an abbreviation for application service provider. The program includes information subjected to a process on an electronic computer and similar to a program. For example, data that is not a direct command to a computer and that has a property of defining a process of the computer corresponds to "information similar to a program".

One or some or all of the functions of the in-vehicle apparatus 100 may be implemented by a programmable circuit or a dedicated circuit serving as the control unit 103. In other words, one or some or all of the functions of the in-vehicle apparatus 100 may be implemented by hardware.

The configuration of the server apparatus 20 according to the present embodiment will be described with reference to FIG. 1.

The server apparatus 20 includes a communication unit 21, a storage unit 22, and a control unit 23.

The communication unit 21 includes at least one communication circuit. The communication circuit is, for example, a communication circuit that supports a wired LAN communication standard, such as Ethernet (registered trademark), or a communication circuit that supports a wireless LAN communication standard, such as IEEE 802.11. The communication unit 21 receives information used in the operation of the server apparatus 20 and transmits information obtained through the operation of the server apparatus 20.

The storage unit 22 includes at least one semiconductor memory, at least one magnetic memory, at least one optical memory, or any combination of them. The semiconductor memory is, for example, a RAM, a ROM, or a flash memory. The RAM is, for example, an SRAM or a DRAM. The ROM is, for example, an EEPROM. The flash memory is, for example, an SSD. The magnetic memory is, for example, an HDD. The storage unit 22 may function as, for example, a main storage device, an auxiliary storage device, or a cache memory. The storage unit 22 stores information used in the operation of the server apparatus 20 and information obtained through the operation of the server apparatus 20.

The control unit 23 includes at least one processor, at least one programmable circuit, at least one dedicated circuit, or any combination of them. The processor is, for example, a general-purpose processor, such as a CPU and a GPU, or a special-purpose processor specialized in a specific process. The programmable circuit is, for example, an FPGA. The dedicated circuit is, for example, an ASIC. The control unit 23 executes a process related to the operation of the server apparatus 20 while controlling the units of the server apparatus 20.

The functions of the server apparatus 20 are implemented by the processor, that is, the control unit 23, running a server program. In other words, the functions of the server apparatus 20 are implemented by software. Alternatively, one or some or all of the functions of the server apparatus 20 may be implemented by a programmable circuit or a dedicated circuit serving as the control unit 23. In other words, one or some or all of the functions of the server apparatus 20 may be implemented by hardware.

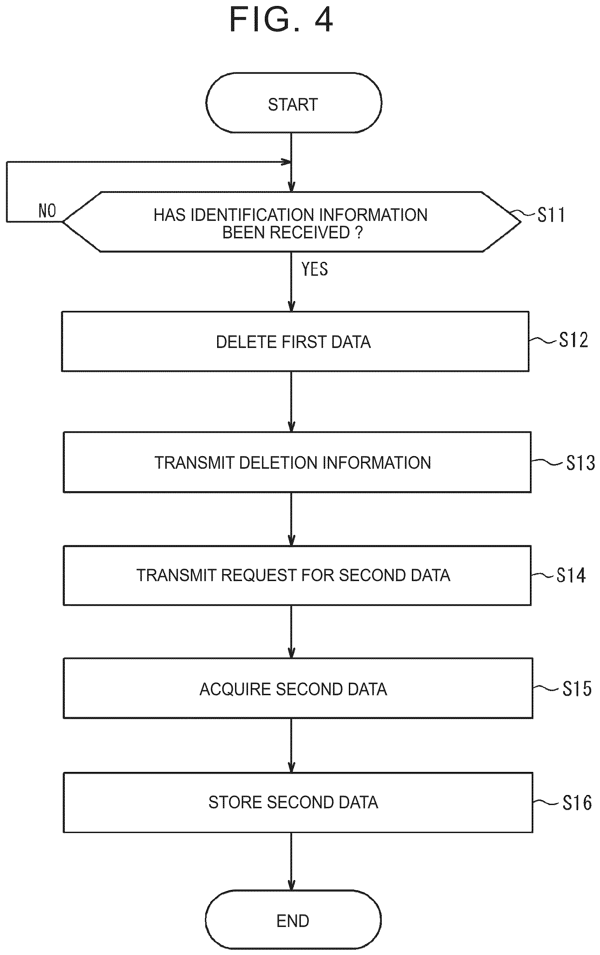

The operation of the in-vehicle apparatus 100 according to the present embodiment will be described with reference to FIG. 4. The operation described below corresponds to a data deletion method performed by the in-vehicle apparatus 100. In other words, the data deletion method according to the present embodiment includes step S11, step S12, step S13, step S14, step S15, and step S16 shown in FIG. 4.

In S11, the control unit 103 waits until the control unit 103 receives identification information by performing wireless communication via the communication unit 101. The control unit 103 receives predetermined identification information from the wireless communication apparatus 40 by performing wireless communication with the wireless communication apparatus 40 via the communication unit 101 during the process in which the vehicle 10 moves outside a region.

Specifically, the control unit 103 receives identification information from the wireless communication apparatus 40 by performing wireless local area network communication or near field communication with the wireless communication apparatus 40 via the communication circuit 111 during the process in which the vehicle 10 moves from a first region to a second region. In the example shown in FIG. 3, when the vehicle 10 reaches the port P of the first country and the wireless communication apparatus 40 installed at the port P and the vehicle 10 including the in-vehicle apparatus 100 approach within a communicable distance, such as 100 meters, the control unit 103 detects a beacon signal broadcasted by the wireless communication apparatus 40 and recognizes the identification information contained in the beacon signal. In another example, when the vehicle 10 is loaded onto the cargo ship 50 and the wireless communication apparatus 40 installed on the cargo ship 50 and the vehicle 10 including the in-vehicle apparatus 100 approach within a communicable distance, such as 100 meters, the control unit 103 detects a beacon signal broadcasted by the wireless communication apparatus 40 and recognizes the identification information contained in the beacon signal. In further another example, when the vehicle 10 reaches a border checkpoint between the first country and the second country and the wireless communication apparatus 40 installed at the border checkpoint and the vehicle 10 including the in-vehicle apparatus 100 approach within a communicable distance, such as 100 meters, the control unit 103 detects a beacon signal broadcasted by the wireless communication apparatus 40 and recognizes the identification information contained in the beacon signal.

As a first example, the control unit 103 receives the identifier of the wireless communication apparatus 40 from the wireless communication apparatus 40 by performing wireless communication via the communication unit 101. The identifier of the wireless communication apparatus 40 is, for example, an SSID or a MAC address. The SSID may also be an ESSID. ESSID is an abbreviation for extended service set identifier. The storage unit 102 stores a predetermined identifier as identification information in advance. The control unit 103 receives the identifier of the wireless communication apparatus 40 from the wireless communication apparatus 40, and, when the control unit 103 determines that the received identifier matches the identifier stored in the storage unit 102, recognizes that the identification information has been received from the wireless communication apparatus 40. For example, it is assumed that an SSID associated in advance with a location where the vehicle 10 passes during the process in which the vehicle 10 moves from the first country to the second country, such as the port P of the first country, the cargo ship 50, and the border checkpoint between the first country and the second country, is stored in the storage unit 102 in advance. Then, for example, when the control unit 103 receives an SSID from a Wi-Fi access point installed at the location as the wireless communication apparatus 40, the control unit 103 compares the received SSID with the SSID stored in the storage unit 102, and determines that the control unit 103 has received valid identification information.

As a second example, the control unit 103 may receive information containing the identifier of a region where the wireless communication apparatus 40 is installed from the wireless communication apparatus 40 by performing wireless communication via the communication unit 101. In this example, the identifier of the region where the wireless communication apparatus 40 is installed is, for example, a character string or a country code that indicates a country name. The storage unit 102 stores a predetermined identifier included in the identification information. The control unit 103 receives the identifier of the region where the wireless communication apparatus 40 is installed from the wireless communication apparatus 40, and, when the control unit 103 determines that the received identifier matches the identifier stored in the storage unit 102, recognizes that the identification information has been received from the wireless communication apparatus 40. For example, when the first country is Japan, the country code "JP" is assumed to be stored in the storage unit 102 in advance. Then, for example, when the control unit 103 receives the SSID "12345678-JP" from a Wi-Fi access point, serving as the wireless communication apparatus 40, installed at a location where the vehicle 10 passes during the process in which the vehicle 10 moves from the first country to the second country, such as the port P of the first country, the cargo ship 50, and the border checkpoint between the first country and the second country, the control unit 103 compares the country code "JP" contained in the received SSID with the country code "JP" stored in the storage unit 102 and determines that the control unit 103 has received valid identification information.

In S12, the control unit 103 deletes the first data 121 from the storage unit 102 in response to reception of the identification information in S11.

The control unit 103 may confirm that the vehicle 10 is positioned within the first region, based on the position measured by the positioning unit 104. For example, when the first country is Japan, the control unit 103 may determine whether the current position is in Japan by comparing the latitude and longitude of the current position of the vehicle 10, obtained by the GNSS receiver serving as the positioning unit 104, with the map information stored in the storage unit 102. When the control unit 103 determines that the current position is in Japan, the identification information has been normally received in S11. On the other hand, when the control unit 103 determines that the current position is not in Japan, the identification information has been erroneously received in S11, so S11 is executed again or the flowchart shown in FIG. 4 is forcibly terminated. In the case of forced termination, the control unit 103 desirably stores an error log in the storage unit 102 indicating that the identification information was erroneously received.

In S13, the control unit 103 transmits deletion information indicating that the first data 121 has been deleted, to the server apparatus 20 via the communication unit 101. In other words, the control unit 103 transmits information indicating that the first data 121 has been deleted, to the information processing apparatus via the communication unit 101. The transmission of this information may be performed not only when a notification that the first data 121 has been deleted is transmitted but also when the deletion of the first data 121 is logged without transmitting a notification. In the present embodiment, the control unit 103 transmits deletion information to the server apparatus 20 via the wireless communication apparatus 40 by further performing wireless communication via the communication unit 101.

Specifically, the control unit 103 transmits deletion information to the server apparatus 20 by further performing wireless local area network communication or near field communication via the communication circuit 111. For example, when the wireless communication apparatus 40 is a Wi-Fi access point connected to the Internet, the control unit 103 accesses the Internet via the Wi-Fi access point, that is, via a wireless LAN, through the communication circuit 111 and transmits deletion information to the server apparatus 20.

In S14, the control unit 103 transmits a request for the second data 122 to the server apparatus 20 via the communication unit 101. In the present embodiment, the control unit 103 transmits a request to the server apparatus 20 via the wireless communication apparatus 40 by further performing wireless communication via the communication unit 101.

Specifically, the control unit 103 transmits a request to the server apparatus 20 by further performing wireless local area network communication or near field communication via the communication circuit 111. For example, when the wireless communication apparatus 40 is a Wi-Fi access point connected to the Internet, the control unit 103 accesses the Internet via the Wi-Fi access point, that is, via a wireless LAN, through the communication circuit 111 and transmits a request to the server apparatus 20. As the server apparatus 20 to which a request is transmitted, a server apparatus installed in the second country is selected from among server apparatuses installed in respective countries. For example, when the second country is South Korea, the control unit 103 selects a server apparatus installed in South Korea as the server apparatus 20 and transmits a request to the selected server apparatus. In order to be able to recognize which type of data is to be transmitted, the request may include, for example, information regarding the type of data to be transmitted, such as country-specific map data, image data, voice data, and position data.

In S15, the control unit 103 receives the second data 122 from the server apparatus 20 via the communication unit 101. In the present embodiment, the control unit 103 receives the second data 122 from the server apparatus 20 via the wireless communication apparatus 40 by further performing wireless communication via the communication unit 101.

Specifically, the control unit 103 receives the second data 122 from the server apparatus 20 by further performing wireless local area network communication or near field communication via the communication circuit 111. For example, when the wireless communication apparatus 40 is a Wi-Fi access point connected to the Internet, the control unit 103 accesses the Internet via the Wi-Fi access point, that is, via a wireless LAN, through the communication circuit 111 and receives the second data 122 from the server apparatus 20. For example, when it is assumed that a request for country-specific map data is transmitted in S14, the control unit 23 of the server apparatus 20 determines to transmit the country-specific map data among multiple types of data stored in the storage unit 22 in advance via the communication unit 21. Then, the control unit 103 receives country-specific map data from the server apparatus 20 via the Internet and a wireless LAN through the communication circuit 111.

In S16, the control unit 103 stores the second data 122 received in S15 into the storage unit 102.

As described above, according to the present embodiment, data that is held in the vehicle 10 and restricted from being taken outside the region can be appropriately deleted. For example, since the departure of the vehicle 10 can be accurately detected, it is possible to reduce the likelihood that important data, such as map data, which is used or acquired in the first country where data transfer restrictions are imposed, is transferred abroad. In the first country as well, important data can be held while the vehicle 10 is in the first country, so it is possible to, for example, achieve accurate route search by using map data included in the important data.

The disclosure is not limited to the above-described embodiment. For example, two or more blocks shown in the block diagram may be integrated or one block may be divided. Instead of executing two or more steps described in the flowchart in time sequence in accordance with the description, the steps may be executed in parallel or in different order in accordance with the processing capacity of an apparatus that executes the steps, or as needed. Modifications are possible without departing from the purport of the disclosure.

Hereinafter, some embodiments of the disclosure will be described. However, embodiments of the disclosure are not limited to these embodiments.

### Addendum 1

An in-vehicle apparatus is installed in a vehicle. The in-vehicle apparatus includes: a communication circuit configured to perform wireless local area network communication or near field communication; a storage unit storing data that is used or acquired within a region by one of a navigation device and a dashboard camera, mounted on the vehicle, the data being restricted from being transferred outside the region; and a control unit configured to, when the control unit receives predetermined identification information from a wireless communication apparatus by performing the wireless local area network communication or the near field communication with the wireless communication apparatus via the communication circuit during a process in which the vehicle moves outside the region, delete the data from the storage unit.

### Addendum 2

An in-vehicle apparatus is installed in a vehicle. The in-vehicle apparatus includes: a communication unit configured to perform wireless communication; a storage unit storing data restricted from being transferred outside a region; and a control unit configured to, when the control unit receives predetermined identification information from a wireless communication apparatus by performing the wireless communication with the wireless communication apparatus via the communication unit during a process in which the vehicle moves outside the region, delete the data from the storage unit.

### Addendum 3

In the in-vehicle apparatus according to Addendum 2, the communication unit communicates with an information processing apparatus; and the control unit is configured to, when deletion of the data is complete, transmit deletion information indicating that the data has been deleted, to the information processing apparatus via the communication unit.

### Addendum 4

In the in-vehicle apparatus according to Addendum 3, the control unit is configured to, when the deletion is complete, transmit the deletion information to the information processing apparatus via the wireless communication apparatus by further performing the wireless communication via the communication unit.

### Addendum 5

In the in-vehicle apparatus according to Addendum 2, the data is first data that is used or acquired within a first region; the communication unit communicates with an information processing apparatus; and the control unit is configured to, when the control unit receives the identification information from the wireless communication apparatus, receive second data from the information processing apparatus via the communication unit, the second data being used or acquired within a second region to which the vehicle moves from the first region, and store the received second data in the storage unit.

### Addendum 6

In the in-vehicle apparatus according to Addendum 5, the control unit is configured to, when the control unit receives the identification information from the wireless communication apparatus, receive the second data from the information processing apparatus via the wireless communication apparatus by further performing the wireless communication via the communication unit.

### Addendum 7

In the in-vehicle apparatus according to any one of Addenda 2 to 6, the storage unit stores a predetermined identifier as the identification information; and the control unit is configured to, when the control unit receives an identifier of the wireless communication apparatus from the wireless communication apparatus by performing the wireless communication via the communication unit and determines that the received identifier matches the identifier stored in the storage unit, delete the data from the storage unit.

### Addendum 8

In the in-vehicle apparatus according to any one of Addenda 2 to 6, the storage unit stores a predetermined identifier included in the identification information; and the control unit is configured to, when the control unit receives information including an identifier of a region where the wireless communication apparatus is installed from the wireless communication apparatus by performing the wireless communication via the communication unit and determines that the identifier included in the received information matches the identifier stored in the storage unit, delete the data from the storage unit.

### Addendum 9

In the in-vehicle apparatus according to any one of Addenda 2 to 8, the data includes data that is used or acquired within the region by a navigation device mounted on the vehicle.

### Addendum 10

In the in-vehicle apparatus according to any one of Addenda 2 to 9, the data includes data that is used or acquired within the region by a dashboard camera mounted on the vehicle.

### Addendum 11

In the in-vehicle apparatus according to any one of Addenda 2 to 10, the wireless communication is wireless local area network communication or near field communication.

### Addendum 12

In the in-vehicle apparatus according to any one of Addenda 2 to 11, the region is a country.

### Addendum 13

A vehicle includes the in-vehicle apparatus according to any one of Addenda 1 to 12.

### Addendum 14

A system includes: the in-vehicle apparatus according to any one of Addenda 3 to 6; and the information processing apparatus.

### Addendum 15

A system includes: the in-vehicle apparatus according to any one of Addenda 1 to 12; and the wireless communication apparatus.

### Addendum 16

A program for causing a computer to function as the in-vehicle apparatus according to any one of Addenda 1 to 12.

### Addendum 17

A data deletion method is performed by an in-vehicle apparatus installed in a vehicle. The in-vehicle apparatus includes a communication unit configured to perform wireless communication, a storage unit storing data that is restricted from being transferred outside a region, and a control unit. The data deletion method includes when the control unit receives predetermined identification information from a wireless communication apparatus by performing the wireless communication with the wireless communication apparatus via the communication unit during a process in which the vehicle moves outside the region, deleting the data from the storage unit.

### Addendum 18

In the data deletion method according to Addendum 17, the communication unit communicates with an information processing apparatus; and the data deletion method further includes, when deletion of the data is complete, transmitting, by the control unit, deletion information indicating that the data has been deleted, to the information processing apparatus via the communication unit.

### Addendum 19

In the data deletion method according to Addendum 17, the data is first data that is used or acquired within a first region; the communication unit communicates with an information processing apparatus; and the data deletion method further includes: when the control unit receives the identification information from the wireless communication apparatus, receiving the second data from the information processing apparatus via the communication unit, the second data being used or acquired within a second region to which the vehicle moves from the first region; and storing, by the control unit, the received second data in the storage unit.

### Addendum 20

In the data deletion method according to any one of Addenda 17 to 19, the data includes data that is used or acquired within the region by one of a navigation device and a dashboard camera, mounted on the vehicle.

## Claims

1. An in-vehicle apparatus (100) installed in a vehicle (10), the in-vehicle apparatus (100) comprising:
a communication circuit (111) configured to perform wireless local area network communication or near field communication;
a storage unit (102) storing data that is used or acquired within a region by one of a navigation device and a dashboard camera, mounted on the vehicle (10), the data being restricted from being transferred outside the region; and
a control unit (103) configured to, when the control unit (103) receives predetermined identification information from a wireless communication apparatus (40) by performing the wireless local area network communication or the near field communication with the wireless communication apparatus (40) via the communication circuit (111) during a process in which the vehicle (10) moves outside the region, delete the data from the storage unit (102).

2. An in-vehicle apparatus (100) installed in a vehicle (10), the in-vehicle apparatus (100) comprising:
a communication unit (101) configured to perform wireless communication;
a storage unit (102) storing data restricted from being transferred outside a region; and
a control unit (103) configured to, when the control unit (103) receives predetermined identification information from a wireless communication apparatus (40) by performing the wireless communication with the wireless communication apparatus (40) via the communication unit (101) during a process in which the vehicle (10) moves outside the region, delete the data from the storage unit (102).

3. The in-vehicle apparatus (100) according to claim 2, wherein:
the communication unit (101) is configured to communicate with an information processing apparatus (20); and
the control unit (103) is configured to, when deletion of the data is complete, transmit deletion information indicating that the data has been deleted, to the information processing apparatus (20) via the communication unit (101).

4. The in-vehicle apparatus (100) according to claim 3, wherein the control unit (103) is configured to, when the deletion is complete, transmit the deletion information to the information processing apparatus (20) via the wireless communication apparatus (40) by further performing the wireless communication via the communication unit (101).

5. The in-vehicle apparatus (100) according to claim 2, wherein:
the data is first data that is used or acquired within a first region;
the communication unit (101) is configured to communicate with an information processing apparatus (20); and
the control unit (103) is configured to
when the control unit (103) receives the identification information from the wireless communication apparatus (40), receive second data from the information processing apparatus (20) via the communication unit (101), the second data being used or acquired within a second region to which the vehicle (10) moves from the first region, and
store the received second data in the storage unit (102).

6. The in-vehicle apparatus (100) according to claim 5, wherein the control unit (103) is configured to, when the control unit (103) receives the identification information from the wireless communication apparatus (40), receive the second data from the information processing apparatus (20) via the wireless communication apparatus (40) by further performing the wireless communication via the communication unit (101).

7. The in-vehicle apparatus (100) according to claim 2, wherein:
the storage unit (102) stores a predetermined identifier as the identification information; and
the control unit (103) is configured to, when the control unit (103) receives an identifier of the wireless communication apparatus (40) from the wireless communication apparatus (40) by performing the wireless communication via the communication unit (101) and determines that the received identifier matches the identifier stored in the storage unit (102), delete the data from the storage unit (102).

8. The in-vehicle apparatus (100) according to claim 2, wherein:
the storage unit (102) stores a predetermined identifier included in the identification information; and
the control unit (103) is configured to, when the control unit (103) receives information including an identifier of a region where the wireless communication apparatus (40) is installed from the wireless communication apparatus (40) by performing the wireless communication via the communication unit (101) and determines that the identifier included in the received information matches the identifier stored in the storage unit (102), delete the data from the storage unit (102).

9. The in-vehicle apparatus (100) according to claim 2, wherein the data includes data that is used or acquired within the region by a navigation device mounted on the vehicle (10).

10. The in-vehicle apparatus (100) according to claim 2, wherein the data includes data that is used or acquired within the region by a dashboard camera mounted on the vehicle (10).

11. The in-vehicle apparatus (100) according to claim 2, wherein the wireless communication is wireless local area network communication or near field communication.

12. The in-vehicle apparatus (100) according to claim 2, wherein the region is a country.

13. A vehicle (10) comprising the in-vehicle apparatus (100) according to any one of claims 1 to 12.

14. A system (1) comprising:
the in-vehicle apparatus (100) according to any one of claims 3 to 6; and
the information processing apparatus (20).

15. A system (1) comprising:
the in-vehicle apparatus (100) according to any one of claims 1 to 12; and
the wireless communication apparatus (40).
